# EUROPÄISCHE PATENTSCHRIFT

(11) **EP 2 129 601 B1**
(45) Veröffentlichungstag und Bekanntmachung des Hinweises auf die Patenterteilung: **20.10.2010**
(21) Anmeldenummer: 08716405.9
(22) Anmeldetag: 10.03.2008
(51) Int. Cl.: B65G 1/137, B65G 15/44

(54) **VERFAHREN UND KOMMISSIONIERAUTOMAT ZUM BEFÜLLEN EINES AUFTRAGSBEHÄLTERS**
METHOD AND AUTOMATIC PICKING MACHINE FOR FILLING AN ORDER CONTAINER
PROCÉDÉ ET APPAREIL AUTOMATIQUE DE PRÉPARATION DE COMMANDE POUR LE REMPLISSAGE D'UNE CAISSE DE COMMANDE

(30) Priorität: 20.03.2007 DE 102007013175
(43) Veröffentlichungstag der Anmeldung: 09.12.2009
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2008/001895
(87) Internationale Veröffentlichungsnummer: WO 2008/113490

(56) Entgegenhaltungen:
- EP-A- 0 231 360
- DE-A1- 2 938 757
- US-A- 4 569 435

## Beschreibung

Die Erfindung betrifft ein Verfahren und einen Kommissionierautomaten zum Befüllen eines Auftragsbehälters mittels Auswerfer und Förderband gemäß dem Oberbegriff des Anspruchs 1 bzw. 9. Ein derartiges Verfahren ist bereits aus US 4 569 435 A bekannt.

Aus EP 0 213 360 A1 ist ein Kommissionierautomat mit Auswerfern zum Kommissionieren von Produkten auf ein Förderband bekannt, wobei die auf das Förderband kommissionierten Produkte zu einem Auftragsbehälter transportiert und in diesen Auftragsbehälter abgeben werden. Jedem Auswerfer vor- und übergeordnet ist ein Produktspeicher, der sich als Vertikalschacht leicht geneigt zur Vertikalen des Kommissionierautomaten erstreckt. Im Vertikalschacht sind sortenrein Produkte in unmittelbarer Berührung aufeinandergestapelt. Der an tiefster Stelle des Produktstapels gelegene horizontale Auswerfer schiebt bei Bedarf das unterste Produkt des Stapels in Richtung Förderband aus. Ist das unterste Produkt ausgeworfen, verlagert sich der Produktstapel aufgrund seines Eigengewichts um eine Produkthöhe nach unten. Auf diese Weise können Produkte vereinzelt ausgeworfen bzw. kommissioniert werden. Von Nachteil neben der begrenzten Produktstapelhöhe bzw. Produktspeicherkapazität insbesondere ist, dass nur stapelbare Produkte zumeist in Quaderform gespeichert und kommissioniert werden können. Unförmige Produkte scheiden aus. Sollen gleichwohl unförmige, d.h. nicht stapelbare Produkte mitkommissioniert werden, müssen diese Produkte von einer Bedienungsperson von Hand aus einem Vorratsbehälter kommissioniert und entweder auf das Förderband gelegt oder direkt in den Auftragsbehälter eingebracht werden.

Aufgabe der Erfindung ist die Schaffung eines Verfahrens und eines Kommissionierautomaten zum Befüllen eines Auftragsbehälters der eingangs genannten Art, bei dem auch unförmige, d. h. nicht-stapelbare Produkte zuverlässig, schnell und effektiv kommissioniert werden können.

Gelöst wird die der Erfindung zugrundeliegende Aufgabe durch ein Verfahren der im Anspruch 1 angegebenen Art, vorteilhaft weitergebildet durch die Merkmale der Ansprüche 2 bis 8.

Vorteilhafte Kommissionieraut aten kennzeichnen sich durch die Merkmale der Ansprüche 9 bis 25.

Wesen der Erfindung bei einem eingangs genannten Verfahren und Kommissionierautomaten zum Befüllen eines Auftragsbehälters mittels Auswerfer und Förderband ist, dass zu kommissionierende Produkte in den als Umlaufband ausgebildeten Auswerfer selbst als horizontale Produktreihe bei Stillstand des Umlaufbandes gespeichert und durch Betätigen des Umlaufbandes auf das Förderband oder direkt in den Auftragsbehälter abgegeben werden. Der Auswerfer ist also erfindungsgemäß selbst als Produkt(-Haupt)-Speicher des Kommissionierautomaten ausgebildet - nicht etwa als Hilfsspeicher beispielweise in einem Anschluss an ein Durchlaufregal. Der erfindungsgemäße Auswerfer muss nicht exakt horizontal verlaufen. Es versteht sich, dass er bezüglich der Horizontalen auch geneigt und mithin schräg angeordnet sein kann. In einem einzigen Produktspeicher sind primär sortenreine identische Produkte gespeichert.

Es kann vorzugsweise jedes zu kommissionierende Produkt vereinzelt jeweils auf einem Produktspeicherplatz des Umlaufbandes, vorzugsweise in ein Produktfach des Umlaufbandes, eingegeben und gespeichert werden, und es können die auf den Produktspeicherplätzen, insbesondere in den Produktfächern, gespeicherten Produkte vereinzelt abgegeben werden.

Wenn von einem Umlaufband die Rede ist, so kann dies im Rahmen der vorliegenden Erfindung auch eine Umlauf-Gliederkette, ein Stollen- oder Noppenband oder dergleichen sein.

Durch die Erfindung können insbesondere unförmige, unregelmäßig konfigurierte Produkte automatengerecht gespeichert und in einem Kommissionierautomaten kommissioniert werden - Produkte, die mit den aus dem eingangs genannten Stand der Technik bekannten Auswerfern nicht automatisierbar sind. Es können Produkte in nahezu beliebigen Abmessungen bzw. Formen automatisiert werden, wie Teddybären, Erdnussbeutel, Kaffeepackungen, Mullbinden und dergleichen. Es sind keine quaderförmigen Abmessungen notwendig. Stapelbarkeit der Produkte ist nicht Bedingung.

Bei Bedarf werden ein oder mehrere Produkte auf das am Kopfende des Umlaufbandes positionierte Förderband geworfen. Das Förderband ist bevorzugt das Zentralband des Kommissionierautomaten selbst. Der Auswerfer kann mit herkömmlicher Zentralbandtechnologie angesteuert werden. Produkte werden dabei exakt zum richtigen Zeitpunkt auf einen Bereich des Zentralbands geworfen, welcher einem Auftrag zugeordnet ist.

Von Vorteil ferner ist, dass der manuelle Vorgang des Befüllens des Produktspeichers zeitlich vom Kommissioniervorgang entkoppelt ist ("Vorrat im Kanal"). Eine durch Füllstandsanzeige am Kanalende geführte Nachfüllung ist möglich. Die Erfindung erlaubt beliebige konstruktive Kombinationen mit bestehenden Zentralbandautomaten (Modulbauweise). Im wesentlichen horizontale Produktspeicher sind nicht nur nebeneinander mit oder ohne Abstand voneinander, sondern auch in zwei oder mehreren Ebenen übereinander möglich. Verschiedene Kanalbreiten und verschiedene Noppen- oder Querwand-Abstände je nach Produktdimensionen können eingerichtet werden.

Die in Produktfächern gespeicherten Produkte können aufgrund ihres Eigengewichts vorzugsweise zum Teil rutschend auf das Förderband abgegeben werden. Im Kommissionierautomaten können auch konventionelle Produktsäulen mit stapelbaren Produkten in vertikalen Schächten gespeichert und mit Hilfe von unteren konventionellen Ausschiebern dem Förderband zugeführt werden.

Der erfindungsgemäße Auswerfer kann zur Füllstandsverwaltung und/oder zur automatischen Inventur verwendet werden.

Die Produktspeicherplätze, insbesondere die Produktfächer, können auch als virtuelle Ablagestellen für Produkte definiert sein.

Die Erfindung wird nachfolgend anhand von Ausführungsbeispielen unter Bezugnahme auf die beigefügten Zeichnungen näher beschrieben; es zeigen:
- Figur 1: schematisch perspektivisch einen erfindungsgemäßen Kommissionierautomaten mit zentralem Förderband und Auswerfern in Form von horizontalen, in einer Ebene gelegenen Produktspeichern,
- Figur 2: einen Produktspeicher der Figur 1 in einer perspekti- vischen Ansicht,
- Figur 3: einen schematischen Querschnitt durch einen Produkt- speicher unter Weglassung von Längsseitenwänden,
- Figur 4: eine schematische Seitenansicht des Kommissionierau- tomaten nach Figur 1 mit einer weiteren Ebene an ho- rizontalen Produktspeichern,
- Figur 5: eine schematische Draufsicht auf einen erfindungsge- mäßen Kommissionierautomaten zusammen mit benachbar- ten Übervorratsregalen,
- Figuren 6a bis 6d: einen Produktspeicher nach Figur 4 in vier Stellungen einer Befüllung von Produkten von hinten gemäß Zeichnung rechts, und
- Figur 7: eine Einzelheit der Figur 2, rechts.

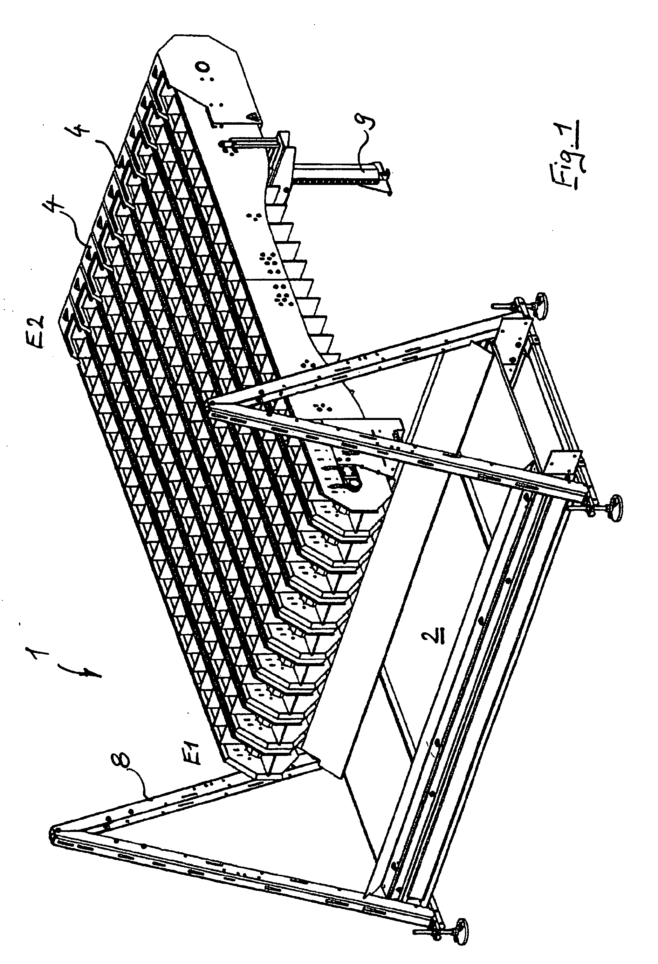

Gemäß den Figuren 1, 4 und 5 umfasst ein Kommissionierautomat 1 Auswerfer in Form von horizontalen Produktspeichern zum Kommissionieren von Produkten 3 auf ein Förderband 2, wobei die auf das Förderband kommissionierten Produkte 3 zu einem Auftragsbehälter 10 transportiert und in diesen Auftragsbehälter abgeben werden. Der Auftragsbehälter enthält die Produkte eines einzigen Kommissionierauftrags.

Der Kommissionierautomat 1 ist ein sogenannter Zentralbandautomat und besitzt als solcher ein unteres horizontales Förderband 2 in Form eines sogenannten Zentralbandes, welches längsmittig zum A-Rahmen 8 des Kommissionierautomaten verläuft.

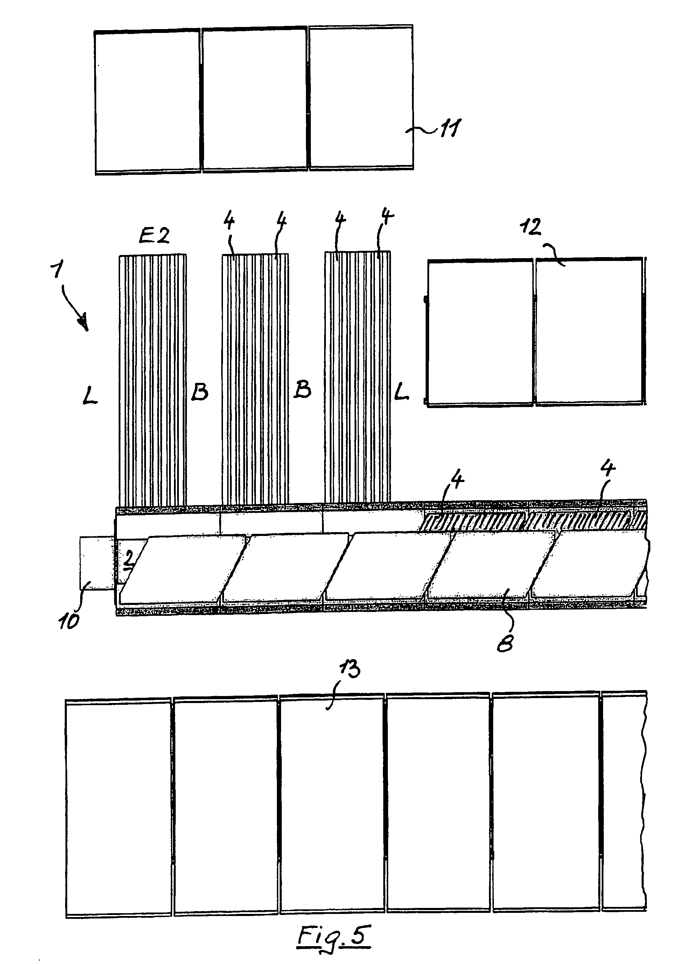

Beigeordnet sind dem Kommissionierautomaten 1 Übervorratsbehälter oder -regale 11, 12 auf der einen Längsseite des eigentlichen Kommissionierautomaten 1 gemäß Figur 5, oben, und Übervorratsbehälter oder -regale 13 auf der anderen Längsseite gemäß Figur 5, unten, und zwar im Griffbereich für Bedienungspersonen, welche den Kommissionierautomaten beidseits mit Produkten befüllen, sowie ein Mindestfüllstand an Produkten bei einem Kommissionieren eingetreten ist.

Die in Figur 5 links vom A-Rahmen 8 gelegene Längsseite des Kommissionierautomaten 1 wird mit stapelbaren Produkten aus dem Übervorratsregal 13 wie nach dem eingangs genannten Stand der Technik befüllt. Die Produkte befinden sich dann in einem Stapel in vertikalen Kommissionierschächten, die in der gemäß Figur 5, linken schrägen Ebene des A-Rahmens 8 liegen.

Die in Figur 5 rechts vom A-Rahmen 8 gelegene Längsseite des Kommissionierautomaten 1 wird demgegenüber erfindungsgemäß mit unförmigen, d.h. nicht-stapelbaren Produkten 3 aus den Übervorratsregalen 11 und 12 befüllt, wie nachfolgend noch beschrieben wird.

Der erfindungsgemäße horizontale Produktspeicher ist ein antreibbares und für ein vereinzeltes Auswerfen eines Produkts 3 auf das Förderband 2 ansteuerbares Umlaufband 4 mit Produktspeicherplätzen, insbesondere mit Produktfächern 5, die in dichter Reihe längs des Umfangs verlaufen.

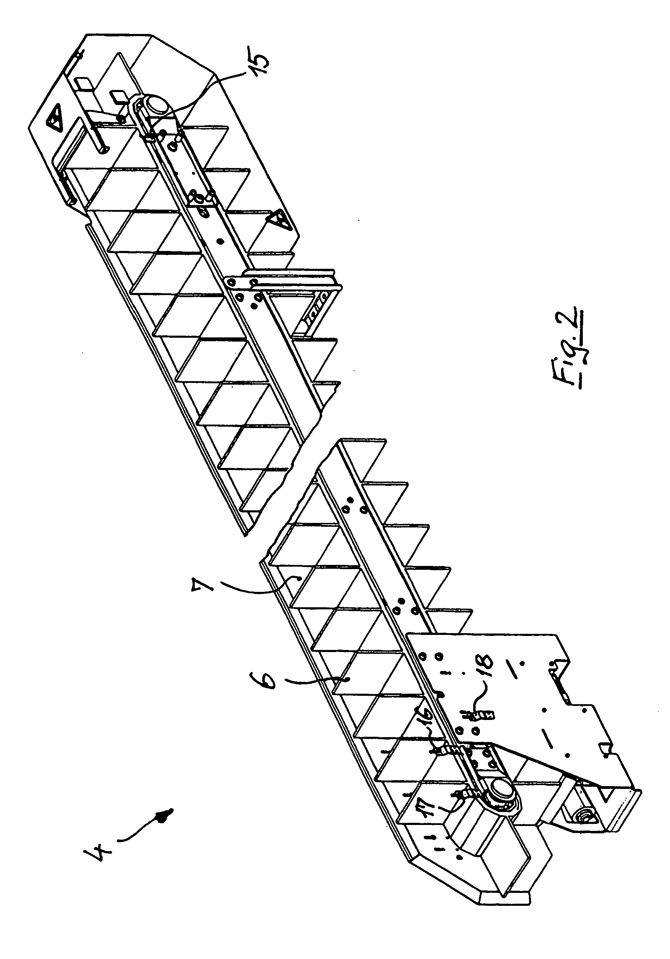

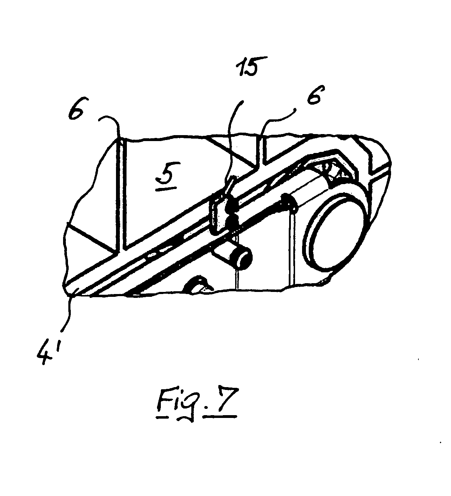

Die Produktfächer 5 weisen vertikale Noppen, Riegel oder Querwände 6 gemäß den Figuren 2 und 7 auf, die sich über die gesamte Breite des Umlaufbandes 4 vorzugsweise senkrecht zum Umlaufband erstrecken.

In einer weitere Ausführungsvariante können die Produktspeicherplätze, insbesondere die Produktfächer 5, in dichter Reihe längs der Umlauflänge des Umlaufbandes 4 angeordnet und als virtuelle Ablagestellen für Produkte 3 definiert sein.

Der Abstand benachbarter Noppen, Riegel oder Querwände 6 ist einstellbar.

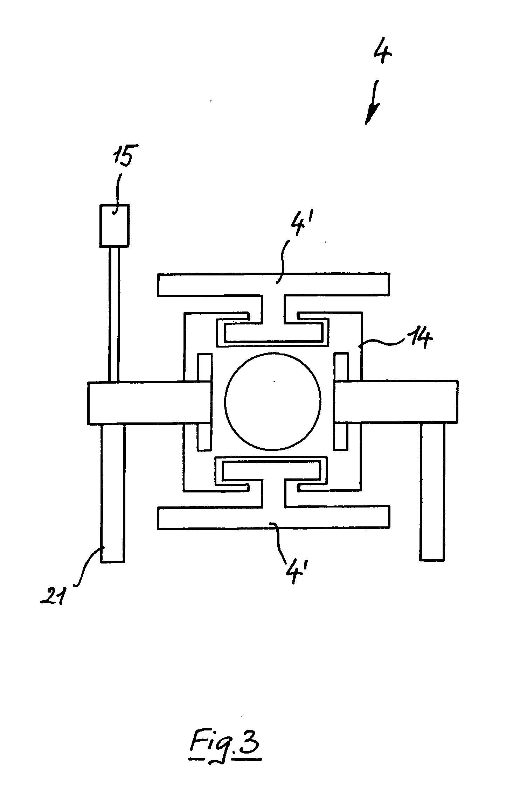

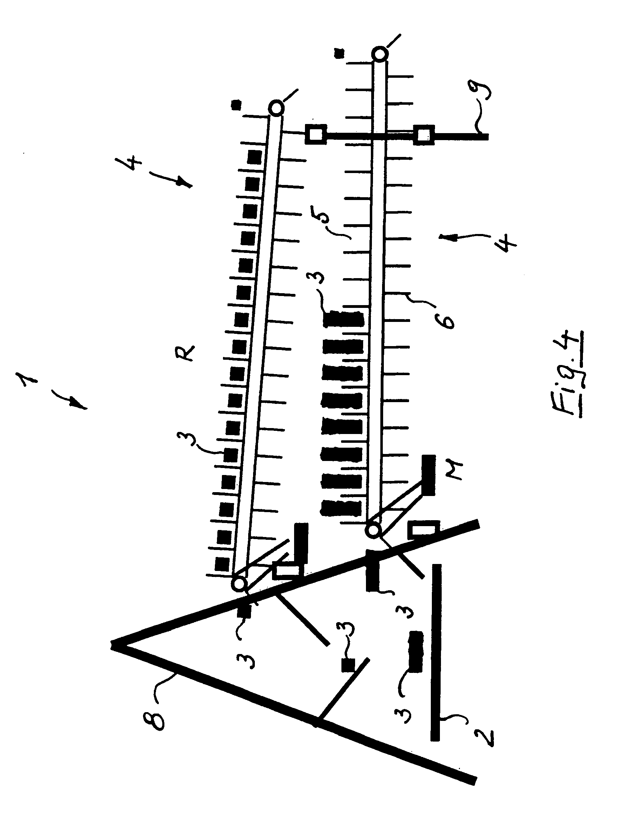

Das Umlaufband 4 gemäß Figur 3 besitzt ein im Querschnitt doppel-T-förmiges Profil 4', welches in einem selbsttragenden Aluminiumprofil 14 verschieblich geführt und durch einen Motor M an der Kopfseite des Umlaufbandes 4 gemäß Figur 4 angetrieben ist. Seitlich vom Profil 4' sind Halterungen 21 für Sensorik sowie (nicht veranschaulichte) Seitenführungen und Abdeckungen angebracht. Das Aluminiumprofil 4' trägt das Gewicht der Produkte 3 auf eine Modulhalterung bzw. am A-Rahmen 8 ab. Beim hinteren Längsende E2 des Umlaufbandes 4 wird das Gewicht der Produkte 3 über Vertikalstützen 9 am Boden abgestützt.

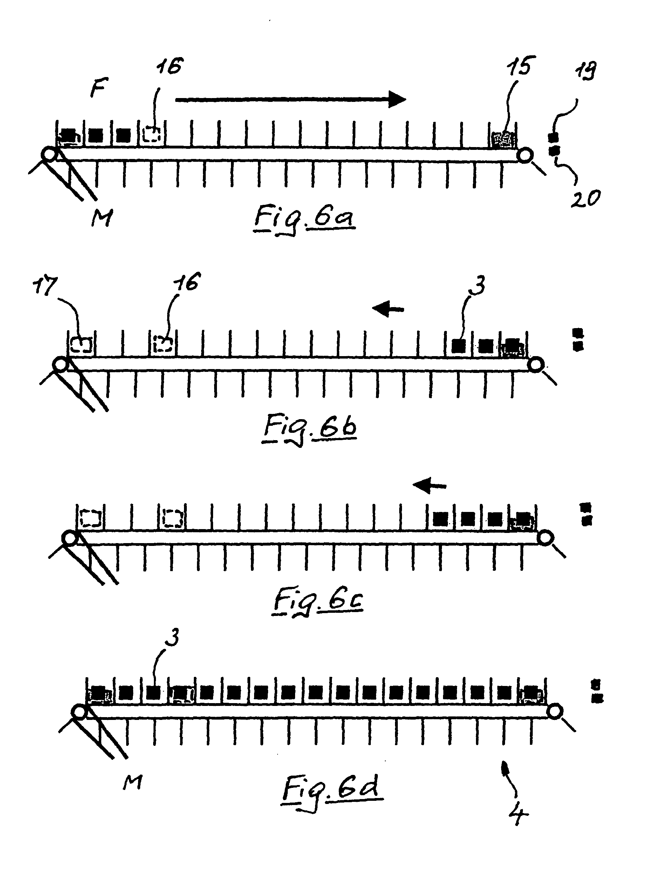

Die Sensorik eines jeden Umlaufbandes 4 umfasst vier Sensoren. Im hinteren Teil des Umlaufbandes befindet sich ein Nachfüllsensor 15 gemäß Figur 2, der in größerer Einzelheit in Figur 7 zu sehen ist. Im vorderen Kopfteil des Umlaufbandes 4 befinden sich ein Leersensor 16 und ein Auswurfsensor 17 gemäß den Figuren 2 und 6a bis 6d auf der Oberseite des Umlaufbandes sowie auf der Unterseite ein Positionierungssensor 18 bzw. Noppensensor, welcher zur genauen Positionierung des Umlaufbandes benötigt wird.

Das Umlaufband 4 kann aus Kettengliedern zusammengesetzt sein.

Einzelne Kettenglieder können als Querwände ausgebildet sein, die in gewünschten Längsabständen zur Ausbildung eines individuellen Produktfaches 5 einbaubar sind.

Das Obertrum des Umlaufbandes 4 besitzt stationäre vertikale Längsseitenwände 7 gemäß Figur 2.

Der Abstand der beiden Längsseitenwände 7 kann gegebenenfalls einstellbar ausgebildet sein.

Das eine Längsende E1 des Umlaufbandes 4 liegt über oder im Bereich des Förderbandes 2, und es ist jeder Produktspeicherplatz, insbesondere jedes Produktfach 5, für ein einziges Produkt 3 vorgesehen.

In Draufsicht erstreckt sich das Umlaufband 4 senkrecht oder schräg zum Förderband 2.

Die Produktspeicherplätze, insbesondere Produktfächer 5, des Obertrums des Umlaufbandes 4 sind mit Produkten 3 bestückbar.

Es sind mehrere horizontale Umlaufbänder 4 vorzugsweise unmittelbar nebeneinander angeordnet, wie dies insbesondere der Figur 1 zu entnehmen ist.

Zwischen nebeneinander angeordneten Umlaufbändern 4 kann gemäß Figur 5 ein Bedienungsraum B für ein seitliches Befüllen der Produktspeicher durch eine Bedienungsperson vorgesehen sein.

Wenn auch in Figur 1 nur eine einzige horizontale Ebene an horizontalen Umlaufbändern in einer Ausführungsvariante dargestellt ist, sind in einer weiteren Ausführungsvariante mehrere horizontale Umlaufbänder 4 übereinander angeordnet, wie dies in Figur 4 schematisch gezeigt ist.

Höher gelegene Umlaufbänder 4 sind gegebenenfalls schräg gestellt und auf der dem Förderband 2 abgewandten Seite tiefer gelegen.

Vorgenannte im wesentlichen horizontale Umlaufbänder 4 sind in der Anordnung nach Figur 5 links oben dargestellt. Eine Bedienungsperson befüllt diese Umlaufbänder 4 im Bedarfsfall von dem hinteren Längsende E2 der Umlaufbänder, von der Längsseite L oder vom Bedienungsraum B. Die zum Befüllen erforderlichen nicht-stapelbaren Produkte 4 holt sich die Bedienungsperson aus den in Reichweite befindlichen Übervorratsregalen 11. Die erfolgte Befüllung bestätigt die Bedienungsperson durch Betätigen eines Tasters.

Im Ausführungsbeispiel nach Figur 5 sind ferner auf der oberen Längskommissionierseite, rechts, Umlaufbänder 4 in der nahezu senkrechten Ebene des A-Rahmens 8 des Kommissionierautomaten 1 vorgesehen, die von einer Bedienungsperson bedient werden. Die Bedienungsperson befüllt diese vertikalen Umlaufbänder 4 bei Bedarf mit nicht-stapelbaren selten kommissionierten Produkten ("Langsam-Läufer"), welche in den in Griffnähe befindlichen Übervorratsregalen 12 bevorratet sind.

Für ein Befüllen eines Auftragsbehälters 10 in einem Kommissionierautomaten 1 mittels Auswerfer und Förderband 2 werden zu kommissionierende Produkte 3 in den als Umlaufband 4 ausgebildeten Auswerfer selbst als horizontale Produktreihe R bei Stillstand des Umlaufbandes 4 gespeichert und durch Betätigen des Umlaufbandes auf das Förderband 2 oder direkt in den Auftragsbehälter 10 abgegeben.

Jedes zu kommissionierende Produkt 3 wird vereinzelt jeweils auf einem Produktspeicherplatz des Umlaufbandes 4, vorzugsweise in ein Produktfach 5 des Umlaufbandes, eingegeben und gespeichert, und es werden die auf den Produktspeicherplätzen, insbesondere in den Produktfächern, gespeicherten Produkte vereinzelt abgegeben.

Bei einem Kommissionieren werden die in den Produktfächern 5 gespeicherten Produkte 3 aufgrund ihres Eigengewichts zum Teil rutschend auf das Förderband 2 gemäß Figur 4 abgegeben.

Nachfolgend wird ein Befüllvorgang eines Umlaufbandes 4 vom hinteren Ende E2 anhand der Figuren 6a bis 6d beschrieben.

Bei betätigtem Umlaufband 4 wird ein Mindestfüllstand F an auf dem Umlaufband 4 gespeicherten Produkten 3 automatisch gemessen und das Umlaufband für ein Nachfüllen von Produkten automatisch gestoppt, welches sich bei einem Kommissioniervorgang gemäß Figur 6a im Gegenuhrzeigersinn bewegt. Das Stoppen erfolgt gemäß Figur 6a durch den Leersensor 16, der bei Nichtvorhandensein eines Produktes 3 die Leerstelle des zugeordneten Produktfachs erkennt und nicht nur das Umlaufband stoppt, sondern auch einer Halbleeranzeige 19 am hinteren Ende des Umlaufbandes 4 optisch und/oder akustisch meldet. Die Bedienungsperson erkennt dann an der Halbleeranzeige das Unterschreiten des Mindestfüllgrades und wird zu diesem Umlaufband geleitet. Am hinteren Ende des Umlaufbandes ist ein Taster 20 zur Befüllungsanforderung angebracht, mit dem die horizontale Produktreihe des Mindestfüllstands F in Pfeilrichtung gemäß Figur 6a bis in die hinterste Position des Umlaufbandes gemäß Figur 6b gefahren wird. Dort erkennt der Nachfüllsensor 15 das Vorhandensein der Produktreihe und taktet wieder um ein Produktfach gemäß Pfeilrichtung der Figur 6b nach links. Die Bedienungsperson füllt gemäß Figur 6c nun ein Produkt 3 in das hinterste Produktfach, und der Nachfüllsensor 15 taktet das Umlaufband um ein Produktfach in Pfeilrichtung gemäß Figur 6c. Die Bedienungsperson füllt nun ein Produkt 3 um das andere immer in das hinterste Produktfach, bis der Auswurfsensor 17 am Kopf des Umlaufbandes das gefüllte vorderste Produktfach erkennt und das Umlaufband stoppt. Ist das Umlaufband bzw. der Produktspeicher gemäß Figur 6d gefüllt, wird die Bedienungsperson durch die Anzeige 19 aufgefordert, die erfolgte Befüllung am Taster 20 erneut zu bestätigen. Der Auswerfer ist für die Dauer der Befüllung inaktiv. Da die Befüllung meist ausserhalb der Kommissionierzeiten erfolgt, stellt das kein Problem dar.

Für ein Nachfüllen von Produkten 3 wird also das Umlaufband 4 eine vorbestimmte Strecke automatisch oder durch manuelle Betätigung rückwärts bewegt und der Mindestfüllstand F an auf dem Umlaufband 4 gespeicherten Produkten 3 optisch oder/und akustisch angezeigt.

Der Auswerfer kann zur Füllstandsverwaltung und/oder zur automatischen Inventur verwendet werden.

Insbesondere verwaltet der Auswerfer den Füllgrad, indem die seit der letzten Befüllung erfolgten Auswürfe durch den Auswurfsensor 17 gezählt und in Relation zur gesamten Kanallänge bzw. Produktspeicherlänge gestellt werden.

Für eine automatische Inventur kann der Steuerrechner des Kommissionierautomaten den Kanal bzw. den Produktspeicher zur Inventur auffordern. Dabei führt der Kanal seine Produktreihe R nur einmal nach hinten und wieder nach vorne, und zählt die freien Produktfächer.

Auch kann der benötigte Nachschub an Produkten erfasst werden. Durch die geführte Befüllung der Kanäle am hinteren Ende wird die nachgefüllte Menge automatisch erfasst und kann an ein übergeordnetes Bestandsverwaltungssystem weitergemeldet werden.

## Patentansprüche

1. Verfahren zum Befüllen eines Auftragsbehälters in einem Kommissionierautomaten (1) mittels Auswerfer und Förderband (2), wobei zu kommissionierende Produkte (3) in den als Umlaufband (4) ausgebildeten Auswerfer selbst als im wesentlichen horizontale Produktreihe (R) bei Stillstand des Umlaufbandes (4) gespeichert und durch Betätigen des Umlaufbandes auf das Förderband (2) oder direkt in den Auftragsbehälter (10) abgegeben werden,
**dadurch gekennzeichnet,**
**dass** bei betätigtem Umlaufband (4) ein Mindestfüllstand (F) an auf dem Umlaufband (4) gespeicherten Produkten (3) automatisch gemessen und das Umlaufband für ein Nachfüllen von Produkten automatisch gestoppt wird.

2. Verfahren nach Anspruch 1,
**dadurch gekennzeichnet,**
**dass** für ein Nachfüllen von Produkten (3) das Umlaufband (4) eine vorbestimmte Strecke automatisch oder durch manuelle Betätigung rückwärts bewegt wird.

3. Verfahren nach den Ansprüchen 1 oder 2,
**dadurch gekennzeichnet,**
**dass** der Mindestfüllstand (F) an auf dem Umlaufband (4) gespeicherten Produkten (3) optisch oder/und akustisch angezeigt wird.

4. Verfahren nach einem der Ansprüche 1 bis 3,
**dadurch gekennzeichnet,**
**dass** jedes zu kommissionierende Produkt (3) vereinzelt jeweils auf einem Produktspeicherplatz des Umlaufbandes (4), vorzugsweise in ein Produktfach (5) des Umlaufbandes, eingegeben und gespeichert wird und die auf den Produktspeicherplätzen, insbesondere in den Produktfächern, gespeicherten Produkte vereinzelt abgegeben werden.

5. Verfahren nach Anspruch 4,
**dadurch gekennzeichnet,**
**dass** die Produkte (3) in die Produktfächer (5) von der Längsseite (L) des Umlaufbandes (4) oder von dem vom Förderband (2) abgewandten Längsende (E2) des Umlaufbandes manuell eingegeben werden.

6. Verfahren nach Anspruch 4 oder 5,
**dadurch gekennzeichnet,**
**dass** die in den Produktfächern (5) gespeicherten Produkte (3) aufgrund ihres Eigengewichts vorzugsweise zum Teil rutschend auf das Förderband (2) abgegeben werden.

7. Verfahren nach einem der Ansprüche 1 bis 6,
**dadurch gekennzeichnet,**
**dass** im Kommissionierautomaten (1) auch Produktsäulen in vertikalen Schächten gespeichert und mittels unter den Schächten angeordneter Ausschieber dem Förderband (2) zugeführt werden.

8. Verfahren nach einem der Ansprüche 1 bis 7,
**dadurch gekennzeichnet,**
**dass** der Auswerfer zur Füllstandsverwaltung und/oder zur automatischen Inventur verwendet wird.

9. Kommissionierautomat (1) mit Auswerfern zum Kommissionieren von Produkten (3) auf ein Förderband (2), wobei die auf das Förderband kommissionierten Produkte (3) zu einem Auftragsbehälter (10) transportiert und in diesen Auftragsbehälter abgeben werden, wobei
der Auswerfer in Form eines im wesentlichen horizontalen Produktspeichers ausgebildet ist, **dadurch gekennzeichnet, dass** der Kommissionierautomat (1) zur Durchführung des Verfahrens nach einem der Ansprüche 1 bis 7 ausgestaltet ist.

10. Kommissionierautomat nach Anspruch 9,
**dadurch gekennzeichnet,**
**dass** der Produktspeicher ein antreibbares und für ein vereinzeltes Auswerfen eines Produkts (3) auf das Förderband (2) ansteuerbares Umlaufband (4) mit Produktspeicherplätzen, insbesondere mit Produktfächern (5), in dichter Reihe längs des Umfangs ist, wobei das eine Längsende (E1) des Umlaufbandes (4) über oder im Bereich des Förderbandes (2) liegt und jeder Produktspeicherplatz, insbesondere jedes Produktfach (5), für ein einziges Produkt (3) vorgesehen ist.

11. Kommissionierautomat nach Anspruch 10,
**dadurch gekennzeichnet,**
**dass** in Draufsicht das Umlaufband (4) sich senkrecht oder schräg zum Förderband (2) erstreckt.

12. Kommissionierautomat nach Anspruch 10 oder 11,
**dadurch gekennzeichnet,**
**dass** die Produktspeicherplätze, insbesondere Produktfächer (5), des Obertrums des Umlaufbandes (4) mit Produkten (3) bestückbar sind.

13. Kommissionierautomat nach einem der Ansprüche 10 bis 12,
**dadurch gekennzeichnet,**
**dass** mehrere horizontale Umlaufbänder (4) vorzugsweise unmittelbar nebeneinander angeordnet sind.

14. Kommissionierautomat nach Anspruch 13,
**dadurch gekennzeichnet,**
**dass** zwischen nebeneinander angeordneten Umlaufbändern ein Bedienungsraum (B) für ein seitliches Befüllen der Produktspeicher durch eine Bedienungsperson vorgesehen ist.

15. Kommissionierautomat nach einem der Ansprüche 10 bis 14,
**dadurch gekennzeichnet,**
**dass** mehrere horizontale Umlaufbänder (4) übereinander angeordnet sind.

16. Kommissionierautomat nach einem der Ansprüche 10 bis 15,
**dadurch gekennzeichnet,**
**dass** höher gelegene Umlaufbänder (4) schräg gestellt und auf der dem Förderband (2) abgewandten Seite tiefer gelegen sind.

17. Kommissionierautomat nach einem der Ansprüche 9 bis 16,
**dadurch gekennzeichnet,**
**dass** das Förderband (2) das Zentralband des Kommissionierautomaten (1) ist.

18. Kommissionierautomat nach einem der Ansprüche 9 bis 17,
**dadurch gekennzeichnet,**
**dass** auch vertikale Produktspeicher in Form von Kommissionierschächten mit unteren zusätzlichen Auswerfern in Form von Ausschiebern vorgesehen sind.

19. Kommissionierautomat nach einem der Ansprüche 10 bis 18,
**dadurch gekennzeichnet,**
**dass** die Produktspeicherplätze, insbesondere die Produktfächer (5), in dichter Reihe längs der Umlauflänge des Umlaufbandes (4) angeordnet und als virtuelle Ablagestellen für Produkte (3) definiert sind.

20. Kommissionierautomat nach einem der Ansprüche 10 bis 19,
**dadurch gekennzeichnet,**
**dass** die Produktfächer (5) vertikale Noppen, Riegel oder Querwände (6) aufweisen, die sich über die gesamte Breite des Umlaufbandes (4) vorzugsweise senkrecht zum Umlaufband erstrecken.

21. Kommissionierautomat nach Anspruch 20,
**dadurch gekennzeichnet,**
**dass** der Abstand benachbarter Noppen, Riegel oder Querwände (6) einstellbar ist.

22. Kommissionierautomat nach einem der Ansprüche 10 bis 21,
**dadurch gekennzeichnet,**
**dass** das Umlaufband (4) aus Kettengliedern zusammengesetzt ist.

23. Kommissionierautomat nach Anspruch 22
**dadurch gekennzeichnet,**
**dass** einzelne Kettenglieder als Querwände ausgebildet sind, die in gewünschten Längsabständen zur Ausbildung eines individuellen Produktfaches (5) einbaubar sind.

24. Kommissionierautomat nach einem der Ansprüche 10 bis 23,
**dadurch gekennzeichnet,**
**dass** das Obertrum des Umlaufbandes (4) stationäre vertikale Längsseitenwände (7) besitzt.

25. Kommissionierautomat nach Anspruch 24,
**dadurch gekennzeichnet,**
**dass** der Abstand der beiden Längsseitenwände (7) einstellbar ist.

## Claims

1. Process for filling an order container in an automatic commissioning unit (1) by means of ejectors and conveyor belt (2), wherein products (3) to be commissioned are stored into ejectors themselves, which are designed as a circulating belt (4), as a essentially horizontal product row (R) when the circulating belt (4) is stopped and are released onto the conveyor belt (2) or directly into the order container (10) by actuating the circulating belt
**characterized in that**
a minimum filling level (F) of products (3) being stored on the circulating belt (4) is automatically measured with the circulating belt (4) actuated and the circulating belt is automatically stopped for refilling products.

2. Process in accordance with claim 1,
**characterized in that**
the circulating belt (4) is moved backwards by a predetermined amount automatically or by manual actuation for refilling products (3).

3. Process in accordance with claim 1 or 2,
**characterized in that**
the minimum filling level (F) of products (3) being stored on the circulating belt (4) is displayed optically and/or acoustically.

4. Process in accordance with one of the claims 1 through 3,
**characterized in that**
each product (3) to be commissioned is introduced separately on a product storage place of the circulating belt (4), preferably into a product compartment (5) of the circulating belt, and stored, and the products being stored on the product storage places, especially in the product compartments, are released separately.

5. Process in accordance with claim 4,
**characterized in that**
the products (3) are introduced manually into the product compartments (5) from the longitudinal side (L) of the circulating belt (4) or from the longitudinal end (E2) of the circulating belt, which said longitudinal end faces away from the conveyor belt (2).

6. Process in accordance with claim 4 or 5,
**characterized in that**
the products (3) being stored in the product compartments (5) can be released onto the conveyor belt (2) preferably partly sliding under their own weight.

7. Process in accordance with one of the claims 1 through 6,
**characterized in that**
product columns can also be stored in vertical shafts in the automatic commissioning unit (1) and fed to the conveyor belt (2) by means of pushing ejectors arranged under the shafts.

8. Process in accordance with one of the claims 1 through 7,
**characterized in that**
the ejector is used to manage the filling level and/or for automatic inventory control.

9. Automatic commissioning unit (1) with ejectors for commissioning products (3) onto a conveyor belt (2), wherein the products (3) commissioned onto the conveyor belt are transported to an order container (10) and are released into this order container, and wherein the ejector is designed in the form of an essentially horizontal product storage means
**characterized in that**
said automatic commissioning unit (1) is designed for carrying out the process in accordance with one of the claims 1 through 7.

10. Automatic commissioning unit in accordance with claim 9,
**characterized in that**
the product storage means is a drivable circulating belt (4),
which can be actuated for the separate ejection of a product (3) onto the conveyor belt (2), with product storage spaces, especially with product compartments (5), in a dense row along the circumference, wherein one longitudinal end (E1) of the circulating belt (4) is located above or in the area of the conveyor belt (2) and each product storage place, especially each product compartment (5), is provided for a single product (3).

11. Automatic commissioning unit in accordance with claim 10,
**characterized in that**
in a top view, the circulating belt (4) extends at right angles or obliquely to the conveyor belt (2).

12. Automatic commissioning unit in accordance with claim 10 or 11,
**characterized in that**
the product storage places, especially product compartments (5), of the carrying run of the circulating belt (4) can be equipped with products (3).

13. Automatic commissioning unit in accordance with one of the claims 10 through 12,
**characterized in that**
a plurality of horizontal circulating belts (4) are arranged preferably directly next to each other.

14. Automatic commissioning unit in accordance with claim 13,
**characterized in that**
an operating space (B) for the lateral filling of the product storage means by a human operator is provided between circulating belts arranged next to each other.

15. Automatic commissioning unit in accordance with one of the claims 10 through 14,
**characterized in that**
a plurality of horizontal circulating belts (4) are arranged one on top of another.

16. Automatic commissioning unit in accordance with one of the claims 10 through 15,
**characterized in that**
circulating belts (4) located higher are positioned obliquely and are located deeper on the side facing away from the conveyor belt (2).

17. Automatic commissioning unit in accordance with one of the claims 9 through 16,
**characterized in that**
the conveyor belt (2) is the central belt of the automatic commissioning unit (1).

18. Automatic commissioning unit in accordance with one of the claims 9 through 17,
**characterized in that**
vertical product storage means are also provided in the form of commissioning shafts with lower, additional ejectors in the form of pushing ejectors.

19. Automatic commissioning unit in accordance with one of the claims 10 through 18,
**characterized in that**
the product storage places, especially the product compartments (5), are arranged in a dense row along the circumferential length of the circulating belt (4) and are defined as virtual deposition sites for products (3).

20. Automatic commissioning unit in accordance with one of the claims 10 through 19,
**characterized in that**
the product compartments (5) have vertical naps, bars or transverse walls (6), which extend over the entire width of the circulating belt (4) preferably at right angles to the circulating belt.

21. Automatic commissioning unit in accordance with claim 20,
**characterized in that**
the distance between adjacent naps, bars or transverse walls (6) is adjustable.

22. Automatic commissioning unit in accordance with one of the claims 10 through 21,
**characterized in that**
the circulating belt (4) is composed of chain links.

23. Automatic commissioning unit in accordance with claim 22,
**characterized in that**
individual chain links are designed as transverse walls, which can be installed at desired longitudinal distances to form an individual product compartment (5).

24. Automatic commissioning unit in accordance with one of the claims 10 through 23,
**characterized in that**
the carrying run of the circulating belt (4) has stationary longitudinal side walls (7).

25. Automatic commissioning unit in accordance with claim 24,
**characterized in that**
the distance between the two longitudinal side walls (7) is adjustable.

## Revendications

1. Procédé pour le remplissage d'une caisse de commande dans un appareil automatique de préparation de commande (1) à l'aide d'un éjecteur et d'un tapis de transport (2), les produits (3) à préparer étant stockés dans l'éjecteur prenant la forme d'un tapis tournant (4) sous la forme d'une rangée de produits (R) pour l'essentiel horizontale à l'arrêt du tapis tournant (4) et étant dégagés sur le tapis de transport (2) ou directement dans la caisse de commande (10) par actionnement du tapis tournant, **caractérisé en ce que** lorsque le tapis tournant (4) est actionné, un niveau de remplissage minimal (F) est automatiquement mesuré au niveau des produits (3) stockés sur le tapis tournant (4) et que le tapis tournant est arrêté pour un remplissage ultérieur des produits.

2. Procédé selon la revendication 1, **caractérisé en ce que** pour un remplissage ultérieur des produits (3), le tapis tournant (4) est déplacé vers l'arrière sur un tronçon prédéfini, automatiquement ou par actionnement manuel.

3. Procédé selon les revendications 1 ou 2, **caractérisé en ce que** le niveau de remplissage minimal (F) est indiqué optiquement et/ou acoustiquement au niveau des produits (3) stockés sur le tapis tournant (4).

4. Procédé selon l'une quelconque des revendications 1 à 3, **caractérisé en ce que** chaque produit (3) à préparer est inséré et stocké individuellement respectivement sur un emplacement de stockage de produit du tapis tournant (4), de préférence dans un casier de produit (5) du tapis tournant, et que les produits stockés sur les emplacements de stockage de produit, notamment dans les casiers de produit, sont dégagés de façon individuelle.

5. Procédé selon la revendication 4, **caractérisé en ce que** les produits (3) sont amenés manuellement dans les casiers de produit (5) depuis le côté longitudinal (L) du tapis tournant (4) ou depuis l'extrémité longitudinale (E2) du tapis tournant opposée au tapis de transport (2).

6. Procédé selon la revendication 4 ou 5, **caractérisé en ce que** les produits (3) stockés dans les casiers de produit (5) sont dégagés de préférence en partie par glissement sur le tapis de transport (2) du fait de leur poids propre.

7. Procédé selon l'une quelconque des revendications 1 à 6, **caractérisé en ce que** des piles de produits sont également stockées dans l'appareil automatique de préparation de commande (1) dans des boîtes verticales et amenées au tapis de transport (2) à l'aide de systèmes poussoirs disposés sous les boîtes.

8. Procédé selon l'une quelconque des revendications 1 à 7, **caractérisé en ce que** l'éjecteur est utilisé pour gérer le niveau de remplissage et/ou pour réaliser un inventaire automatique.

9. Appareil automatique de préparation de commande (1) avec éjecteurs pour la préparation de commande de produits (3) sur un tapis de transport (2), les produits (3) préparés sur le tapis de transport étant amenés à une caisse de commande (10) et dégagés dans cette caisse de commande, l'éjecteur prenant la forme d'un dispositif de stockage de produit pour l'essentiel horizontal, **caractérisé en ce que** l'appareil automatique de préparation de commande (1) est réalisé pour permettre la mise en oeuvre du procédé selon l'une quelconque des revendications 1 à 7.

10. Appareil automatique de préparation de commande selon la revendication 9, **caractérisé en ce que** le dispositif de stockage de produit est un tapis tournant (4) pouvant être entraîné et commandé pour jeter individuellement un produit (3) sur le tapis de transport (2) et est doté d'emplacements de stockage de produit, notamment de casiers de produit (5), étroitement alignés le long de la périphérie, l'extrémité longitudinale (E1) du tapis tournant (4) reposant au-dessus de la zone du tapis de transport (2) ou à l'intérieur de celle-ci et chaque emplacement de stockage de produit, notamment chaque casier de produit (5), étant prévu pour un seul produit (3).

11. Appareil automatique de préparation de commande selon la revendication 10, **caractérisé en ce qu'**en vue en élévation, le tapis tournant (4) s'étend verticalement ou en oblique par rapport au tapis de transport (2).

12. Appareil automatique de préparation de commande selon la revendication 10 ou 11, **caractérisé en ce que** les emplacements de stockage de produit, notamment les casiers de produit (5), de la veine supérieure du tapis tournant (4) peuvent être dotés de produits (3).

13. Appareil automatique de préparation de commande selon l'une quelconque des revendications 10 à 12, **caractérisé en ce que** plusieurs tapis tournants (4) horizontaux sont disposés de préférence directement côte à côte.

14. Appareil automatique de préparation de commande selon la revendication 13, **caractérisé en ce qu'**un espace de manipulation (B) est prévu entre les tapis tournants disposés côte à côte pour un remplissage latéral du dispositif de stockage de produit par un opérateur.

15. Appareil automatique de préparation de commande selon l'une quelconque des revendications 10 à 14, **caractérisé en ce que** plusieurs tapis tournants (4) horizontaux sont disposés les uns au-dessus des autres.

16. Appareil automatique de préparation de commande selon l'une quelconque des revendications 10 à 15, **caractérisé en ce que** les tapis tournants (4) les plus en hauteur sont disposés de façon inclinée et reposent en bas sur le côté opposé au tapis de transport (2).

17. Appareil automatique de préparation de commande selon l'une quelconque des revendications 9 à 16, **caractérisé en ce que** le tapis de transport (2) est le tapis central de l'appareil automatique de préparation de commande (1).

18. Appareil automatique de préparation de commande selon l'une quelconque des revendications 9 à 17, **caractérisé en ce que** des dispositifs de stockage de produit verticaux sont également prévus sous la forme de boîtes de préparation de commande avec des éjecteurs inférieurs supplémentaires prenant la forme de systèmes poussoirs.

19. Appareil automatique de préparation de commande selon l'une quelconque des revendications 10 à 18, **caractérisé en ce que** les emplacements de stockage de produit, notamment les casiers de produit (5), sont disposés en rang serré le long de la longueur périphérique du tapis tournant (4) et définis sous la forme d'emplacements de rangement virtuels pour les produits (3).

20. Appareil automatique de préparation de commande selon l'une quelconque des revendications 10 à 19, **caractérisé en ce que** les casiers de produit (5) comportent des boucles verticales, des brides ou des parois transversales (6) qui s'étendent sur l'ensemble de la largeur du tapis tournant (4), de préférence perpendiculairement au tapis tournant.

21. Appareil automatique de préparation de commande selon la revendication 20, **caractérisé en ce que** l'écartelent des boucles, brides ou parois transversales (6) connexes est réglable.

22. Appareil automatique de préparation de commande selon l'une quelconque des revendications 10 à 21, **caractérisé en ce que** le tapis tournant (4) est composé de maillons de chaîne.

23. Appareil automatique de préparation de commande selon la revendication 22, **caractérisé en ce que** les différents maillons de chaîne prennent la forme de parois transversales pouvant être intégrées à des écartements souhaités en longueur pour former un casier de produit (5) individuel.

24. Appareil automatique de préparation de commande selon l'une quelconque des revendications 10 à 23, **caractérisé en ce que** la veine supérieure du tapis tournant (4) possède des parois latérales longitudinales (7) verticales stationnaires.

25. Appareil automatique de préparation de commande selon la revendication 24, **caractérisé en ce que** l'écartement des deux parois latérales longitudinales (7) est réglable.
